# FASCICULE DE BREVET EUROPEEN

(11) **EP 0 953 594 B1**
(45) Date de publication et mention de la délivrance du brevet: **27.08.2003**
(21) Numéro de dépôt: 99400905.8
(22) Date de dépôt: 14.04.1999
(51) Int. Cl.: C08K 3/08, A63B 21/065

(54) **Poids destinés à charger des vêtements pour exercices corporels et nouveaux matériaux composites polymériques réticulés, denses, mous et souples**
Gewichte zum Füllen von Sportbekleidungsstücken sowie neue gehärtete polymere Verbundmaterialien die von hoher Dichte, weich und flexibel sind
Weights for filling sportswear and novel cured polymer composite material which is dense, soft and flexible

(30) Priorité: 28.04.1998 FR 9805288
(43) Date de publication de la demande: 03.11.1999
(73) Titulaire: SNPE, 75181 Paris Cedex 04 (FR)
(72) Inventeur: Dubocage, Bernard, 77820 Les Ecrennes (FR); Maucourt, Jacques, 91710 Vert le Petit (FR)

(56) Documents cités:
- EP-A- 0 265 696
- DE-A- 3 532 512
- GB-A- 2 156 357
- US-A- 4 621 808

## Description

La présente invention se situe dans le domaine de l'entretien et de la rééducation des fonctions musculaires.

Elle concerne de nouveaux poids destinés à charger des vêtements pour exercices corporels, par exemple effectués dans un but d'entraînement sportif, ou bien encore de rééducation des fonctions musculaires.

Elle concerne également de nouveaux matériaux composites polymériques réticulés, denses, mous et souples particulièrement adaptés pour réaliser de tels poids.

Les vêtements chargés de poids pour exercices corporels sont bien connus de l'homme du métier.

Le brevet US 5 300 000 décrit par exemple un gant chargé de poids constitués d'une matrice élastomérique thermoplastique, par exemple vinylique, chargée par de la grenaille de plomb.

Le brevet DE 3 532 512 décrit un gilet chargé de poids constitués d'une matière plastique flexible et souple chargée par de la poudre de plomb ou de fer.

Ces poids ne sont toutefois pas suffisamment mous et souples et s'avèrent en pratique assez peu confortables. De plus, le plomb étant un métal toxique, ces poids peuvent être dangereux pour l'utilisateur, notamment lors d'utilisations prolongées ou répétitives.

Le brevet PCT WO 94/01183 décrit une combinaison chargée de poids en forme de plaques et constitués d'un noyau en plomb revêtu par une matière plastique leur procurant une certaine flexibilité.

La souplesse des poids est toutefois très limitée, et augmenter l'épaisseur du revêtement conduit rapidement à des poids trop volumineux.

Les vêtements connus chargés de poids pour exercices corporels sont donc particulièrement inconfortables et l'homme du métier est à la recherche de poids à la fois denses, très mous et très souples pouvant se conformer le mieux possible au corps lors des exercices, sans aucune gêne pour le sportif ou le patient, et constitués d'un matériau non toxique.

La présente invention permet de résoudre ce problème.

Elle a pour objet de nouveaux poids ayant les propriétés précitées recherchées et destinés à charger un vêtement pour exercices corporels.

Ces nouveaux poids destinés à charger un vêtement pour exercices corporels, qui sont constitués en un matériau composite dense et souple comprenant une matrice organique polymérique et une charge pulvérulente métallique dispersée dans la matrice polymérique, sont caractérisés en ce que le matériau composite est mou, réticulé et obtenu par chauffage d'une composition pâteuse coulable thermodurcissable comprenant :
- un prépolymère liquide comportant des terminaisons fonctionnelles réactives, ayant une masse moléculaire moyenne en nombre (Mn) comprise entre 500 et 10000, choisi dans le groupe constitué par les polybutadiènes, les polyesters, les polyéthers et les polyéther-esters,
- un agent réticulant de ce prépolymère,
- une charge pulvérulente tungsténique.

L'état physique, pâteux de la composition et liquide du prépolymère, doit être apprécié dans les conditions normales de température et de pression.

Par matériau composite « réticulé », il faut comprendre que la matrice organique polymérique du matériau composite est thermodurcie et constitue un réseau tridimensionnel.

Par « vêtement », il faut comprendre toute pièce d'habillement apte à recouvrir de manière ajustée au moins une partie du corps humain ou animal, comme par exemple une veste, une combinaison, un pantalon, un short, un serre-tête, un gant, un manchon pour le pied ou la jambe, une selle pour cheval.

Par matériau composite « dense », il faut comprendre un matériau composite dont la densité est comprise entre environ 3 et environ 12.

Par matériau composite « mou », il faut comprendre un matériau composite présentant une dureté Shore A, déterminée selon la méthode bien connue de l'homme du métier, comprise entre environ 20 et environ 50.

Par matériau composite « souple », il faut comprendre un matériau composite présentant un module d'élasticité à 20°C compris entre environ 0,5 MPa et environ 5 MPa ainsi qu'un allongement à la rupture à 20°C compris entre environ 100% et environ 400%, ces caractéristiques mécaniques étant déterminées de façon usuelle à l'aide d'une machine de traction.

Il est particulièrement surprenant que de tels matériaux composites, denses donc fortement chargés, et réticulés, puissent être aussi mous et souples, plus mous et plus souples que la plupart des matériaux denses thermoplastiques connus, comme par exemple les matériaux composites à base d'élastomère EPDM (Ethylène, Propylène Diène Monomères) chargés par du tungstène en poudre, dont le module d'élasticité à 20°C est supérieur à 150 MPa et l'allongement à la rupture à 20°C est inférieur à 30%.

Ces matériaux composites polymériques réticulés, denses, mous et souples particulièrement adaptés pour réaliser des poids destinés à charger des vêtements pour exercices corporels, sont, à notre connaissance, nouveaux.

Lors des exercices, de tels poids se conforment parfaitement au corps sans aucune gêne pour l'utilisateur et sans aucun mouvement de ces poids par rapport au corps, ce qui évite tout risque de blessure pendant des exercices violents et procure un confort jamais atteint jusqu'alors.

De plus, les poids selon l'invention, qui sont non toxiques et sans odeur, conservent leur élasticité et leur souplesse, d'une part à toute température comprise entre - 50°C et 80°C, et d'autre part lorsqu'ils sont soumis à des sollicitations rapides (efforts rapides, violents et répétés). Ils possèdent par ailleurs un pouvoir amortissant au choc très élevé en cas d'efforts intenses, de chutes ou de chocs, ainsi qu'une faible sensibilité à l'humidité et à la transpiration.

Selon l'invention, les exercices corporels réalisés à l'aide des vêtements chargés de poids sont de préférence destinés à un entraînement sportif ou à une rééducation musculaire, mais ils peuvent avoir d'autres motivations telle que le diagnostic d'asymétries fonctionnelles.

Les combinaisons pour l'entraînement sportif sont particulièrement préférées.

Les poids selon l'invention peuvent par exemple être mis en place dans des logements fixes et-précis de ces vêtements de façon à respecter le schéma corporel et le centre de gravité de l'individu.

L'optimisation de l'efficacité de ces exercices corporels peut être obtenue, pour chaque cas particulier, par un choix judicieux de la densité , de la dureté et de l'élasticité du matériau, de la masse, de la taille et de l'épaisseur du poids ainsi que du positionnement des poids sur les différentes parties du corps.

La granulométrie de la charge pulvérulente tungsténique est de préférence comprise entre 0,5 µm et 200 µm, mieux encore entre 0,5 µm et 100 µm.

Le domaine 1µm-50µm est particulièrement préféré.

Selon une variante préférée, la charge pulvérulente tungsténique est choisie dans le groupe constitué par le tungstène, les mélanges de tungstène avec un autre métal, les alliages du tungstène et les composés du tungstène.

De façon particulièrement préférée, la charge pulvérulente tungsténique est choisie dans le groupe constitué par le tungstène, les mélanges fer-tungstène, les alliages ferrotungstènes, les alliages tungstène-nickel-fer, le carbure de tungstène, les oxydes de tungstène et les sels de tungstène.

Comme autres exemples non limitatifs de charges pulvérulentes à base de tungstène pouvant convenir, on peut citer les alliages W/Fe/Cr, W/Fe/Si, W/Ni/Cu et W/Ni/Co.

De façon préférée, la charge métallique représente entre 15% et 60% en volumes par rapport au matériau composite, de préférence entre 30% et 60% en volumes, et la densité du matériau composite est comprise entre 5 et 12.

Les poids selon l'invention peuvent se présenter sous toute forme usuelle de poids destinés à charger les vêtements pour exercices corporels, par exemple sous forme de plaques ou de cylindres.

De façon préférée, ils se présentent sous forme de plaques, dont l'épaisseur est de préférence comprise entre 2 mm et 10 mm, et dont les angles peuvent être arrondis.

Par ailleurs, selon l'invention, le prépolymère liquide peut comporter également des fonctions réactives non terminales, c'est à dire fixées le long de la chaîne constituant le prépolymère. Ces fonctions réactives non terminales sont de préférence identiques aux fonctions terminales.

On obtient, dans ce cas, une fonctionnalité en fonctions réactives supérieure à 2, par exemple comprise entre 2,0 et 2,5.

Bien entendu, cette fonctionnalité peut ne pas être un nombre entier, ce qui est en général le cas, du fait qu'un polymère n'est que très rarement constitué de molécules identiques, et que la fonctionnalité mesurée n'est qu'une fonctionnalité moyenne statistique.

Selon l'invention, comme exemples de polyéthers liquides, on peut citer les polyoxypropylènes de formule 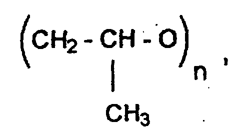 comme exemples de polyesters liquides ceux de formule 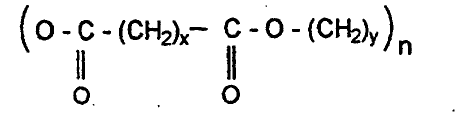 et comme exemples de polyéther-esters liquides ceux de formule 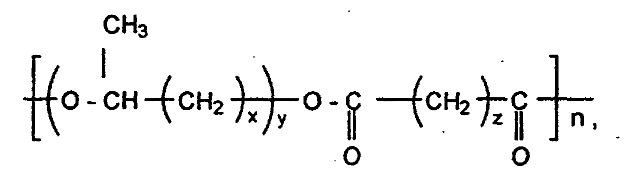 formules dans lesquelles x, y, z et n représentent des nombres entiers.

De façon particulièrement préférée le prépolymère liquide est un polybutadiène de masse Mn comprise entre 1000 et 5000.

Cette variante permet d'obtenir, de façon inattendue, des matériaux composites de densité comprise entre 3 et 12, particulièrement mous, de dureté Shore A comprise entre 20 et 50, par exemple voisine de 35, et particulièrement souples, avec un allongement à la rupture à 20°C compris entre 200% et 400%, par exemple voisin de 300%, et un module d'élasticité à 20°C compris entre 0,5 MPa et 3 MPa, par exemple voisin de 1 MPa.

Les poids destinés à charger des vêtements pour exercices corporels réalisés avec de tels matériaux composites permettent d'atteindre un niveau de confort d'utilisation des vêtements et de conformation au corps des poids sans aucune commune mesure avec le niveau jusqu'alors atteint en utilisant les poids connus de l'état de la technique.

De façon générale, la chaîne polybutadiénique comporte des insaturations vinyliques pendantes et des insaturations éthyléniques dans la chaîne pouvant être en position cis ou en position trans.

De façon préférée, le polybutadiène comporte entre 15% et 25% d'insaturations vinyliques pendantes, par rapport au nombre total des insaturations.

De façon également préférée, il comporte également entre 50% et 60% d'insaturations en position trans et entre 20% et 30% d'insaturations en position cis, par rapport au nombre total des insaturations.

Selon une variante préférée, le polybutadiène comporte des terminaisons fonctionnelles hydroxyles et l'agent réticulant est un polyisocyanate, par exemple un diisocyanate comme le diisocyanate de toluylène (mélange des isomères 2,4 et 2,6), le 4,4'-diphénylméthane diisocyanate, l'hexaméthylène diisocyanate, l'isophorone diisocyanate, permettant de former ainsi un réseau réticulé polyuréthanne.

Lorsque le réticulant est un diisocyanate, on utilise un polybutadiène de fonctionnalité en hydroxyles supérieure à 2, par exemple de l'ordre de 2,2, et/ou on ajoute dans la composition thermodurcissable un polyol extenseur de chaîne ayant une fonctionnalité en hydroxyles supérieure à 2, comme le triméthylolpropane.

Selon une autre variante, le polybutadiène comporte des terminaisons fonctionnelles carboxyles et l'agent réticulant est un polyépoxyde ou une polyaziridine, permettant de former ainsi un réseau réticulé respectivement ester-alcool ou ester-amine.

Comme exemples de polyépoxydes, on peut citer les divers condensats d'épichlorhydrine et de glycérol, qui sont des mélanges de di- et de tri-époxydes comportant des restes chlorés, et comme exemples de polyaziridines on peut citer le tris 1-(2-méthyl)-aziridinyl phosphine oxyde (MAPO) et le phényl bis 1-(2-méthyl)-aziridinyl phosphine oxyde (phényl MAPO).

Lorsque le réticulant est difonctionnel, on utilise un polybutadiène ayant une fonctionnalité en fonction carboxyles supérieure à 2.

Selon une autre variante, la composition pâteuse coulable thermodurcissable comprend également un agent plastifiant comme l'azélate de dioctyle, le sébaçate de dioctyle et le phtalate de dioctyle.

Selon une autre variante, la composition pâteuse coulable thermodurcissable comprend également un agent antioxydant comme ceux bien connus de l'industrie du caoutchouc, notamment un phénol comme le ditertiobutylparacrésol.

Selon une autre variante, la composition pâteuse coulable thermodurcissable comprend également un catalyseur de réticulation permettant de réduire le temps et/ou la température de réaction.

Ces catalyseurs sont en général des sels organiques de métaux de transition, comme l'acétylacétonate de fer, l'acétylacétonate de cuivre, l'octoate de plomb, le chromate de plomb et le dilaurate de dibutyl-étain.

Selon une autre variante, la composition pâteuse coulable thermodurcissable comprend également un polyol extenseur de chaîne, par exemple un diol comme le triméthylhexanediol ou un triol comme le triméthylolpropane.

Selon l'invention, la composition pâteuse coulable thermodurcissable peut par exemple être obtenue par mélange préalable, dans un malaxeur, du prépolymère liquide avec la charge pulvérulente tungsténique, en présence éventuellement du polyol extenseur de chaîne, du plastifiant et de l'antioxydant, à une température par exemple comprise entre 30°C et 80°C, et éventuellement à pression réduite.

On ajoute ensuite le catalyseur éventuel, puis ensuite l'agent réticulant du prépolymère.

Après mélange, à une température par exemple comprise entre 30°C et 50°C, et de préférence à pression réduite, jusqu'à l'obtention d'une pâte homogène, celle-ci est coulée dans des moules à la forme choisie pour les poids, par exemples des plaques d'épaisseur comprise entre 2 mm et 10 mm.

La composition pâteuse thermodurcissable est ensuite réticulée par chauffage à une température comprise entre 60°C et 150°C, de préférence comprise entre 90°C et 120°C.

Après refroidissement du moule, on obtient, par démoulage, des matériaux composites polymériques réticulés, denses, mous et souples utilisables directement comme poids destinés à charger un vêtement pour exercices corporels.

La présente invention a également pour objet les nouveaux matériaux composites polymériques réticulés, denses, mous et souples précités, à savoir de nouveaux matériaux composites denses et souples comprenant une matrice organique polymérique et une charge pulvérulente métallique dispersée dans la matrice polymérique, caractérisés en ce que ces matériaux composites sont mous, réticulés, et obtenus par chauffage d'une composition pâteuse coulable thermodurcissable comprenant :
- un prépolymère liquide comportant des terminaisons fonctionnelles réactives, ayant une masse Mn comprise entre 500 et 10 000, choisi dans le groupe constitué par les polybutadiènes, les polyéthers, les polyesters et les polyéther-esters, de préférence un polybutadiène ayant une masse Mn comprise entre 1000 et 5000,
- un agent réticulant de ce prépolymère,
- une charge pulvérulente tungsténique.

L'exemple non limitatif suivant illustre l'invention et les avantages qu'elle procure.

On réalise, par mélange des divers constituants dans un réacteur en verre de 1 litre, une composition pâteuse coulable thermodurcissable ayant la composition massique suivante :
- polybutadiène à terminaisons hydroxyles, de masse Mn environ 2300, de fonctionnalité en hydroxyles proche de 2,2, comportant 20% d'insaturations vinyliques pendantes, 25% d'insaturations dans la chaîne en position cis et 55% d'insaturations dans la chaîne en position trans : 100,0 g
- alcool court extenseur de chaîne : triméthylhexanediol (TMHD) : 13,2 g
- plastifiant : azélate de dioctyle
   (DOZ) : 71,6 g
- antioxydant : ditertiobutylparacrésol (DBPC) : 1,0 g
- charge pulvérulente métallique : alliage W/Ni/Fe 92/5/3 respectivement en poids de granulométrie 5-10 µm et de densité 19 : 1600 g
- catalyseur de réticulation
   dibutyldilaurate d'étain (DBTL) : 1,8 g
- agent réticulant : mélange des
   isomères 2,4 et 2,6 du toluylène
   diisocyanate (Dis-T ou TDI ou Desmodur T) : 21,2 g

Pour réaliser ce mélange, on effectue tout d'abord un prémélange de l'alcool court, du plastifiant et de l'antioxydant, puis on ajoute le polybutadiène à terminaisons hydroxyles et la charge pulvérulente métallique.

On agite et homogénéise ce prémélange par chauffage à 60°C durant 4 h sous pression réduite d'environ 10 mm Hg. Après refroidissement à la température ambiante et retour à la pression atmosphérique, on ajoute le catalyseur de réticulation en agitant le mélange 2 min environ à 25°C.

On ajoute ensuite l'agent réticulant, puis on mélange à 40°C durant 10 min environ, sous pression réduite d'environ 10 mm Hg.

La composition pâteuse thermodurcissable alors obtenue est ensuite coulée dans un moule préchauffé à 110°C ayant la forme générale d'un parallélépipède rectangle de longueur 15 cm, de largeur 13 cm et d'épaisseur 5 mm, mais dont les angles sont légèrement arrondis.

On réticule ensuite la composition contenue dans le moule par chauffage durant 6 h à 110°C.

Après refroidissement du moule à la température ambiante, on démoule une plaque ayant les dimensions précitées du moule, directement utilisable, après saupoudrage éventuel de talc, comme poids destiné à charger un vêtement pour exercices corporels.

La densité du matériau composite constituant cette plaque, déterminée selon la méthode par immersion, est de 5,8 et sa dureté Shore A, déterminée selon la norme ASTM D 2240 est de 35.

On a par ailleurs déterminé (6 mesures), à l'aide d'une machine de traction classique, à partir d'éprouvettes monodimensionnelles normalisées, à 20°C sous une humidité relative de 40%, avec une vitesse de traction de 50 mm/min, les propriétés mécaniques du matériau composite constituant cette plaque
Module d'élasticité (E) : 1,09 ± 0,07 MPa
Allongement à la rupture (eᵣ) : 280 ± 20%
Contrainte maximale (Sm) : 1,8 ± 0,1 MPa
Allongement à la contrainte
   maximale (eₘ) : 270 ± 20%.

Après réalisation de plusieurs plaques identiques à celles précitées, celles-ci ont été utilisées comme poids pour charger une combinaison pour exercices corporels telle que celle décrite dans le brevet PCT précité WO 94/01183.

L'utilisateur a pu constater un niveau de confort d'utilisation et de conformation au corps des poids jamais atteint jusqu'alors avec les poids traditionnels.

## Revendications

1. Poids destiné à charger un vêtement pour exercices corporels, constitué en un matériau composite dense et souple comprenant une matrice organique polymérique et une charge pulvérulente métallique dispersée dans la matrice polymérique, **caractérisé en ce que** le matériau composite est mou, réticulé, et obtenu par chauffage d'une composition pâteuse coulable thermodurcissable comprenant :
- un prépolymère liquide comportant des terminaisons fonctionnelles réactives, ayant une masse comprise entre 500 et 10 000, choisi dans le groupe constitué par les polybutadiènes, les polyesters, les polyéthers et les polyéther-esters,
- un agent réticulant de ce prépolymère,
- une charge pulvérulente tungsténique.

2. Poids selon la revendication 1, **caractérisé en ce que** le matériau composite réticulé présente une dureté Shore A comprise entre 20 et 50, un module d'élasticité à 20°C compris entre 0,5 MPa et 5 MPa et un allongement à la rupture à 20°C compris entre 100% et 400%.

3. Poids selon la revendication 1, **caractérisé en ce que** le vêtement pour exercices corporels est un vêtement destiné à un entraînement sportif ou à une rééducation musculaire.

4. Poids selon la revendication 1, **caractérisé en ce qu'**il se présente sous forme d'une plaque.

5. Poids selon la revendication 4, **caractérisé en ce que** la plaque a une épaisseur comprise entre 2 mm et 10 mm.

6. Poids selon la revendication 1, **caractérisé en ce que** la densité du matériau composite est comprise entre 3 et 12 et **en ce que** la charge pulvérulente tungsténique représente entre 15% et 60% en volumes par rapport au matériau composite.

7. Poids selon la revendication 1, **caractérisé en ce que** la charge pulvérulente tungsténique est choisie dans le groupe constitué par le tungstène, les mélanges de tungstène avec un autre métal, les alliages du tungstène et les composés du tungstène.

8. Poids selon la revendication 7, **caractérisé en ce que** la charge pulvérulente tungsténique est choisie dans le groupe constitué par le tungstène, les mélanges fer-tungstène, les alliages ferrotungstènes, les alliages tungstène-nickel-fer, les carbures de tungstène, les oxydes de tungstène et les sels de tungstène.

9. Poids selon la revendication 1, **caractérisé en ce que** le prépolymère liquide comporte également des fonctions réactives non terminales.

10. Poids selon la revendication 1, **caractérisé en ce que** le prépolymère liquide est un polybutadiène de masse comprise entre 1000 et 5000.

11. Poids selon la revendication 10, **caractérisé en ce que** le matériau composite présente une dureté Shore A comprise entre 20 et 50, un module d'élasticité à 20°C compris entre 0,5 MPa et 3 MPa et un allongement à la rupture à 20°C compris entre 200% et 400%.

12. Poids selon la revendication 10, **caractérisé en ce que** les terminaisons fonctionnelles réactives du polybutadiène sont des fonctions hydroxyles et **en ce que** l'agent réticulant est un polyisocyanate.

13. Poids selon la revendication 12, **caractérisé en ce que** la composition pâteuse coulable thermodurcissable comprend également un polyol extenseur de chaîne.

14. Poids selon la revendication 10, **caractérisé en ce que** les terminaisons fonctionnelles réactives du polybutadiène sont des fonctions carboxyles et **en ce que** l'agent réticulant est un polyépoxyde ou une polyaziridine.

15. Poids selon la revendication 1, **caractérisé en ce que** la composition pâteuse coulable thermodurcissable comprend également un agent plastifiant.

16. Poids selon la revendication 1, **caractérisé en ce que** la composition pâteuse coulable thermordurcissable comprend également un agent antioxydant.

17. Poids selon la revendication 1, **caractérisé en ce que** la composition pâteuse coulable thermodurcissable comprend également un catalyseur de réticulation.

18. Poids selon la revendication 1, **caractérisé en ce que** la température de chauffage est comprise entre 60°C et 150°C.

19. Vêtement pour exercices corporels, **caractérisé en ce qu'**il est chargé par au moins un poids selon l'une des revendications précédentes.

20. Vêtement selon la revendication 19, **caractérisé en ce que** ce vêtement est une combinaison pour l'entraînement sportif.

21. Matériau composite dense et souple comprenant une matrice organique polymérique et une charge pulvérulente métallique dispersée dans la matrice polymérique, **caractérisé en ce que** ce matériau composite est mou, réticulé, et obtenu par chauffage d'une composition pâteuse coulable thermodurcissable comprenant :
- un prépolymère liquide comportant des terminaisons fonctionnelles réactives, ayant une masse comprise entre 500 et 10000, choisi dans le groupe constitué par les polybutadiènes, les polyesters, les polyéthers et les polyéther-esters,
- un agent réticulant de ce prépolymère,
- une charge pulvérulente tungsténique.

22. Matériau composite selon la revendication 21, **caractérisé en ce que** le prépolymère liquide est un polybutadiène de masse comprise entre 1000 et 5000.

## Patentansprüche

1. Gewicht, das für ein Bekleidungsstück zum Körpertraining vorgesehen ist und das aus einem biegsamen Verbundwerkstoff mit hoher Dichte besteht, der eine organische Polymermatrix und einen pulverförmigen, metallischen, in der Polymermatrix dispergierten Füllstoff enthält, **dadurch gekennzeichnet, dass** der Verbundwerkstoff weich und vernetzt ist und durch Erwärmen einer pastösen, gießbaren; wärmehärtbaren Zusammensetzung erhalten wird, welche enthält:
- ein flüssiges Prepolymer, das endständige reaktive funktionelle Gruppen enthält, eine Masse im Bereich von 500 bis 10.000 aufweist und unter den Polybutadienen, Polyestern, Polyethern und Polyether-estern ausgewählt ist,
- ein Vernetzungsmittel für dieses Prepolymer, und
- einen pulverförmigen, wolframhaltigen Füllstoff

2. Gewicht nach Anspruch 1, **dadurch gekennzeichnet, dass** der vernetzte Verbundwerkstoff eine Shore-A-Härte im Bereich von 20 bis 50, bei 20° C ein Elastizitätsmodul im Bereich von 0,5 bis 5 MPa und bei 20° C eine Bruchdehnung im Bereich von 100 bis 400 % aufweist.

3. Gewicht nach Anspruch 1, **dadurch gekennzeichnet, dass** das Bekleidungsstück zum Körpertraining ein Bekleidungsstück ist, das zum Sporttraining oder zur Wiederherstellung der Muskelkraft vorgesehen ist.

4. Gewicht nach Anspruch 1, **dadurch gekennzeichnet, dass** es in Form einer Platte vorliegt.

5. Gewicht nach Anspruch 4, **dadurch gekennzeichnet, dass** die Platte eine Dicke im Bereich von 2 mm bis 10 mm aufweist.

6. Gewicht nach Anspruch 1, **dadurch gekennzeichnet, dass** die Dichte des Verbundwerkstoffs im Bereich von 3 bis 12 liegt und dadurch, dass der pulverförmige, wolframhaltige Füllstoff 15 bis 60 Vol.-%, bezogen auf den Verbundwerkstoff, ausmacht.

7. Gewicht nach Anspruch 1, **dadurch gekennzeichnet, dass** der pulverförmige, wolframhaltige Füllstoff unter Wolfram, Gemischen von Wolfram mit einem anderen Metall, Wolframlegierungen und Wolframverbindungen ausgewählt ist.

8. Gewicht nach Anspruch 7, **dadurch gekennzeichnet, dass** der wolframhaltige, pulverförmige Füllstoff unter Wolfram, Eisen-Wolfram-Gemischen, Ferrowolfram-Legierungen, Wolfram-Nickel-Eisen-Legierungen, Wolframcarbiden, Wolframoxiden und Wolframsalzen ausgewählt ist.

9. Gewicht nach Anspruch 1, **dadurch gekennzeichnet, dass** das flüssige Prepolymer auch nicht endständige reaktive Gruppen aufweist.

10. Gewicht nach Anspruch 1, **dadurch gekennzeichnet, dass** das flüssige Prepolymer ein Polybutadien mit einer Masse im Bereich von 1000 bis 5000 ist.

11. Gewicht nach Anspruch 10, **dadurch gekennzeichnet, dass** der Verbundwerkstoff eine Shore-A-Härte im Bereich von 20 bis 50; bei 20° C ein Elastizitätsmodul im Bereich von 0,5 bis 3 MPa und bei 20° C eine Bruchdehnung im Bereich von 200 bis. 400 % aufweist.

12. Gewicht nach Anspruch 10, **dadurch gekennzeichnet, dass** die endständigen reaktiven funktionellen Gruppen des Polybutadien Hydroxygruppen sind und dadurch, dass das Vernetzungsmittel ein Polyisocyanat ist.

13. Gewicht nach Anspruch 12, **dadurch gekennzeichnet, dass** die pastöse, gießbare, wärmehärtbare Zusammensetzung auch ein Polyol als Kettenverlängerer enthält.

14. Gewicht nach Anspruch 10, **dadurch gekennzeichnet, dass** die endständigen reaktiven funktionellen Gruppen des Polybutadien Carboxygruppen sind und dadurch, dass das Vernetzungsmittel ein Polyepoxid oder ein Polyaziridin ist.

15. Gewicht nach Anspruch 1, **dadurch gekennzeichnet, dass** die pastöse, gießbare, wärmehärtbare Zusammensetzung auch einen Weichmacher enthält.

16. Gewicht nach Anspruch 1, **dadurch gekennzeichnet, dass** die pastöse, gießbare, wärmehärtbare Zusammensetzung auch ein Antioxidationsmittel enthält.

17. Gewicht nach Anspruch 1, **dadurch gekennzeichnet, dass** die pastöse, gießbare, wärmehärtbare Zusammensetzung auch einen Vernetzungskatalysator enthält.

18. Gewicht nach Anspruch 1, **dadurch gekennzeichnet, dass** die Temperatur beim Erwärmen im Bereich von 60 bis 150° C liegt.

19. Bekleidungsstück zum Körpertraining, **dadurch gekennzeichnet, dass** es mit mindestens einem Gewicht nach einen der vorhergehenden Ansprüche beladen ist.

20. Bekleidungsstück nach Anspruch 19, **dadurch gekennzeichnet, dass** das Bekleidungsstück ein Trainingsanzug ist.

21. Biegsamer Verbundwerkstoff mit hoher Dichte, der eine organische Polymermatrix und einen in der Polymermatrix dispergierten, pulverförmigen, metallischen Füllstoff enthält; **dadurch gekennzeichnet, dass** der Verbundwerkstoff weich und vernetzt ist und durch Erwärmen einer pastösen, gießbaren, wärmehärtbaren Zusammensetzung erhalten wird, die enthalt:
- ein flüssiges Prepolymer, dass endständige reaktive funktionelle Gruppen aufweist, eine Masse im Bereich von 500 bis 10.000 besitzt und unter den Polybutadienen, Polyestern, Polyethern und Polyether-estern ausgewählt ist,
- ein Vernetzungsmittel für dieses Prepolymer, und
- einen pulverförmigen wolframhaltigen Füllstoff.

22. Verbundwerkstoff nach Anspruch 21, **dadurch gekennzeichnet, dass** das flüssige Prepolymer ein Polybutadien mit einer Masse im Bereich von 1000 bis 5000 ist.

## Claims

1. A weight intended to load a garment for body exercises, said weight being made of a dense and supple composite material comprising a polymeric organic matrix and a metallic pulverulent charge dispersed within said polymeric matrix, **characterised in that** the composite material is soft and reticulate and is obtained by heating a thermosetting pourable pasty composition comprising:
- a liquid prepolymer containing reactive functional terminations and having a mass between 500 and 10,000, chosen from the group constituted by the polybutadienes, the polyesters, the polyethers and the polyether esters,
- a crosslinking agent for said prepolymer,
- a tungstic pulverulent charge.

2. Weight according to Claim 1, **characterised in that** the reticulate composite material exhibits a Shore-A hardness between 20 and 50, a modulus of elasticity at 20°C between 0.5 MPa and 5 MPa and an elongation at rupture at 20°C between 100% and 400%.

3. Weight according to Claim 1, **characterised in that** the garment for body exercises is a garment intended for sports training or for muscle rehabilitation.

4. Weight according to Claim 1, **characterised in that** it takes the form of a panel.

5. Weight according to Claim 4, **characterised in that** the panel has a thickness between 2 mm and 10 mm.

6. Weight according to Claim 1, **characterised in that** the relative density of the composite material is between 3 and 12 and **in that** the tungstic pulverulent charge represents between 15 % and 60 % by volume relative to the composite material.

7. Weight according to Claim 1, **characterised in that** the tungstic pulverulent charge is chosen from the group constituted by tungsten, mixtures of tungsten with another metal, alloys of tungsten and compounds of tungsten.

8. Weight according to Claim 7, **characterised in that** the tungstic pulverulent charge is chosen from the group constituted by tungsten, iron/tungsten mixtures, ferrotungsten alloys, tungsten/nickel/iron alloys, tungsten carbides, tungsten oxides and tungsten salts.

9. Weight according to Claim 1, **characterised in that** the liquid prepolymer also contains non-terminal reactive functional groups.

10. Weight according to Claim 1, **characterised in that** the liquid prepolymer is a polybutadiene with a mass between 1000 and 5000.

11. Weight according to Claim 10, **characterised in that** the composite material exhibits a Shore-A hardness between 20 and 50, a modulus of elasticity at 20°C between 0.5 MPa and 3 MPa and an elongation at rupture at 20°C between 200 % and 400 %.

12. Weight according to Claim 10, **characterised in that** the reactive functional terminations of the polybutadiene are. hydroxyl groups and **in that** the crosslinking agent is a polyisocyanate.

13. Weight according to Claim 12, **characterised in that** the thermosetting pourable pasty composition also comprises a chain-extender polyol.

14. Weight according to Claim 10, **characterised in that** the reactive functional terminations of the polybutadiene are carboxyl groups and **in that** the crosslinking agent is a polyepoxide or a polyaziridine.

15. Weight according to Claim 1, **characterised in that** the thermosetting pourable pasty composition also comprises a plasticiser.

16. Weight according to Claim 1, **characterised in that** the thermosetting pourable pasty composition also comprises an anti-oxidant.

17. Weight according to Claim 1, **characterised in that** the thermosetting pourable pasty composition also comprises a crosslinkage catalyst.

18. Weight according to Claim 1, **characterised in that** the heating-temperature is between 60°C and 150°C.

19. A garment for body exercises, **characterised in that** it is loaded by at least one weight according to one of the preceding claims.

20. Garment according to Claim 19, **characterised in that** said garment is a suit for sports training.

21. A dense and supple composite material comprising a polymeric organic matrix and a metallic pulverulent charge dispersed within said polymeric matrix, **characterised in that** said composite material is soft and reticulate and is obtained by heating a thermosetting pourable pasty composition comprising:
- a liquid prepolymer containing reactive functional terminations and having a mass between 500 and 10,000, chosen from the group constituted by the polybutadienes, the polyesters, the polyethers and the polyether esters,
- a crosslinking agent for said prepolymer,
- a tungstic pulverulent charge.

22. Composite material according to Claim 21, **characterised in that** the liquid prepolymer is a polybutadiene with a mass between 1000 and 5000.
